# EUROPEAN PATENT APPLICATION

(11) **EP 2 117 137 A1**
(43) Date of publication of application: **11.11.2009**
(21) Application number: 07801015.4
(22) Date of filing: 30.08.2007
(51) Int. Cl.: H04B 10/00

(54) **RADIO REMOTE UNIT**

(30) Priority: 29.01.2007 CN 200720000993 U
(71) Applicant: Huawei Technologies Co., Ltd., Bantian, Longgang District Shenzhen Guangdong 518129 (CN)
(72) Inventor: YANG, Hua, Shenzhen Guangdong 518129 (CN); LI, Hao,, Shenzhen Guangdong 518129 (CN); WEN, Hai, Shenzhen Guangdong 518129 (CN); PU, Tao, Shenzhen Guangdong 518129 (CN); TAN, Shengbin, Shenzhen Guangdong 518129 (CN); SU, Yongge, Shenzhen Guangdong 518129 (CN); LI, Zhoujian, Shenzhen Guangdong 518129 (CN); ZHAO, Xiaohong, Shenzhen Guangdong 518129 (CN)
(74) Representative: Kreuz, Georg Maria
(86) International application number: PCT/CN2007/070592
(87) International publication number: WO 2008/092342

(57) **Abstract**

The present invention discloses a remote radio unit and a base station system. The remote radio unit includes an active part and a passive part, where the active part and the passive part are placed respectively on an active module and a passive module that are independent of each other and the active module and the passive module are connected via a pluggable connecting device. Because the passive part is more reliable and less liable to breakdown than the active part, when the active part needs to be repaired, it is unnecessary to dismantle the entire unit. Therefore, the repair is easier and faster and the repair cost is lower. The operation reliability of the base station system is also improved.

## Description

### Field of the Invention

The present invention relates to a communication device, and in particular, to a remote radio unit.

### Background of the Invention

A remote radio unit is located between a base station and a mobile terminal. The remote radio unit is connected to an upper level base station via an optical fiber. It works with the upper level base station under the control of a base station controller to receive and transmit radio frequency signals. The remote radio unit implements radio frequency processing. It is located at the end of a radio access network to complete communication with a mobile terminal directly.

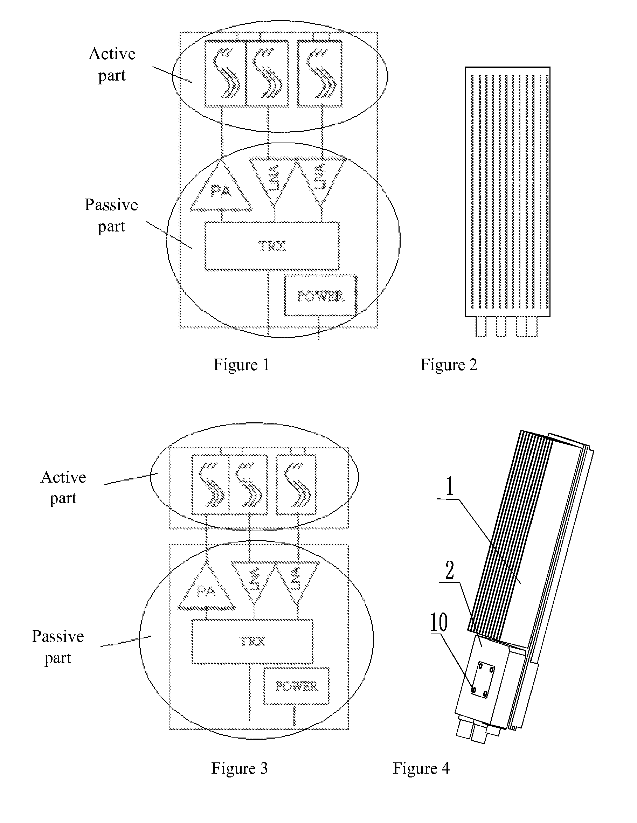

Figure 1 shows the internal modules of a remote radio unit. The remote radio unit includes a passive part and an active part. Because the passive part does not need electricity while the active part needs electricity to work, and the passive part is static while the active part is dynamic, the passive part is more reliable than the active part and the active part is more liable to breakdown.

Figure 2 shows the appearance of a remote radio unit. In the prior art, the active part and the passive part of a remote radio unit are placed in one module and installed in one shell as a whole, which is then installed near to an antenna.

When the active or passive part of a remote radio unit with such a structure becomes faulty and needs to be repaired or replaced, it is necessary to dismantle the entire unit and therefore the repair or replacement takes a long time. Because the active part is more liable to breakdown, if the active part and the passive part are removed together for repair or replacement, the repair cost is high.

### Summary of the Invention

The objective of embodiments of the present invention is to provide a remote radio unit easy to uninstall/install and easy to repair and to provide a base station system that includes the remote radio unit.

The objective of embodiments of the invention is realized through the following technical solution:

A remote radio unit includes an active part and a passive part, where the active part and the passive part are placed respectively on an active module and a passive module that are independent of each other and the active module and the passive module are connected via a pluggable connecting device.

A base station system includes a base station and a remote radio unit, where: the base station and the remote radio unit are connected via a communication line; the remote radio unit is adapted to receive and transmit radio frequency signals; the remote radio unit includes an active part and a passive part, where the active part and the passive part are placed respectively on an active module and a passive module that are independent of each other, and the active module and the passive module are connected via a pluggable connecting device.

In the foregoing technical solution provided by embodiments of the invention, the active part and the passive part of the remote radio unit provided in embodiments of the invention are placed respectively on an active module and a passive module that are independent of each other, and the active module and passive module are connected via a pluggable connecting device. When the active part or the passive part fails, it is only necessary to remove the active module or the passive module accordingly for repair or replacement without the need to dismantle the entire remote radio unit. Therefore, the uninstallation/installation is convenient, the repair is easy, and the repair cost is low.

In the base station system provided in an embodiment of the invention, because the base station is connected to the above remote radio unit, the operation reliability of the base station system is better.

### Brief Description of the Drawings

Figure 1 shows the electric circuit principle of a remote radio unit in the prior art;

Figure 2 shows the structure of a remote radio unit in the prior art;

Figure 3 shows the electric circuit principle of a remote radio unit according to an embodiment of the present invention;

Figure 4 shows the structure of a remote radio unit according to an embodiment of the present invention;

Figure 5 is a reference drawing showing the uninstallation/installation of a remote radio unit according to an embodiment of the present invention;

Figure 6 shows the structure of a passive module in a remote radio unit according to an embodiment of the present invention;

Figure 7 shows the structure of the joint position of an active module in a remote radio unit according to an embodiment of the present invention; and

Figure 8 shows the structural principle of a base station system according to an embodiment of the present invention.

### Detailed Description of the Embodiments

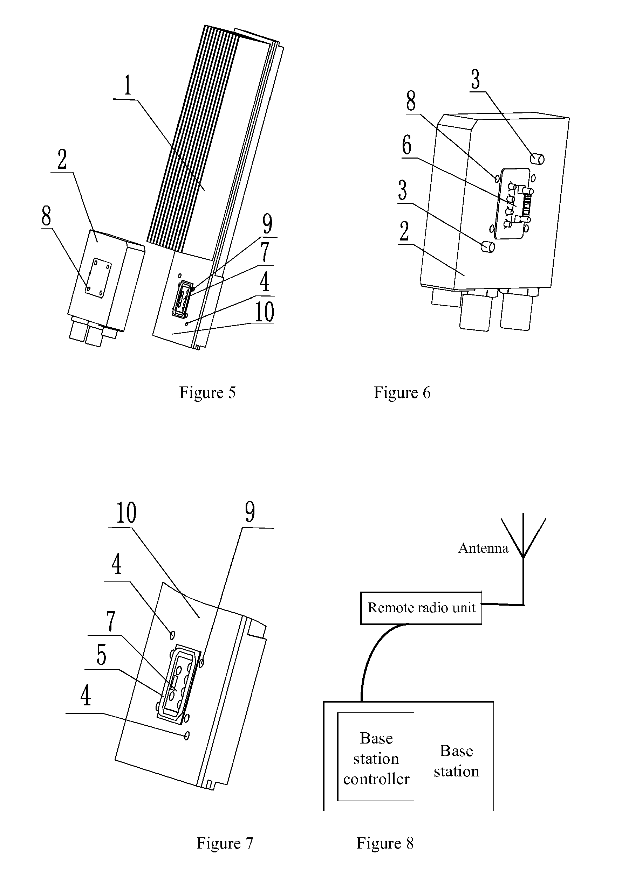

As shown in Figure 4 and Figure 5, in a preferred embodiment of the present invention, a remote radio unit includes an active module 1 and a passive module 2. The active module 1 and the passive module 2 are independent of each other, and the active module 1 and the passive module 2 are connected via a pluggable connecting device. This helps to repair or replace the active module 1 or the passive module 2 independently after disassembly.

According to a preferred connecting mode, the rear part of the active module 1 is extended downward with a joint part 10, and the passive module 2 is placed in the lower part of the active module 1, and the passive module 2 is connected to the joint part 10. The pluggable connecting device is placed between the passive module 2 and the joint part 10 of the active module 1. Preferably, when the passive module 2 and the active module 1 are connected, there is no significant convexity or concave in the overall appearance.

As shown in Figure 3, the active part of the remote radio unit is placed in the active module 1, and the passive part of the remote radio unit is placed in the passive module 2. The electric circuit between the active part and the passive part is connected via the pluggable connecting device between the active module 1 and the passive module 2.

As shown in Figure 6 and Figure 7, the pluggable connecting device includes a plug 6 placed on the passive module 2 and the corresponding socket 7 placed on the joint part 10 of the active module 1. The plug 6 may also be placed on the joint part 10 and the socket 7 may be placed on the passive module 2. When the plug 6 is inserted into the socket 7, on one hand, the plug 6 and the socket 7 match in shape and because the passive module 2 is light in weight, the passive module 2 may be fixed on the active module 1 by inserting the plug 6 into the socket 7 to implement their mechanic connection; on the other hand, corresponding electric contacting points are set between the plug 6 and the socket 7, so that when the plug 6 is inserted into the socket 7, the corresponding electric contacting points get in contact to implement the electric connection between the active module 1 and the passive module 2.

To isolate the pluggable connecting device from the surrounding environment so that the remote radio unit keeps good work performance, a waterproof seal 5 is preferably placed around the plug 6 and the socket 7. The waterproof seal 5 may be applied around the socket 7 or around the plug 6. When the active module 1 and the passive module 2 are connected, the waterproof seal 5 is pressed so that the gap between the active module 1 and the passive module 2 is filled to implement waterproof sealing around the plug 6 and the socket 7.

When the active module 1 and the passive module 2 are connected, to facilitate the insertion and removal, and to ensure accurate contact of the corresponding electric contacting points between the plug 6 and the socket 7, it is preferred that a positioning device should be placed between the active module 1 and the passive module 2, so that the electric contacting points between the plug 6 and the socket 7 of the pluggable connecting device get in accurate contact by means of accurate positioning conducted by the positioning device. Thus, the active module 1 and the passive module 2 are connected conveniently. The positioning device includes a positioning pin 3 placed on the passive module 2 and a positioning hole 4 placed on the joint part 10 of the active module 1. The positioning pin 3 may also be placed on the joint position 10 and the positioning hole 4 may be placed on the passive module 2. There may be one or more positioning pins 3 and one or more positioning holes 4, preferably two.

After the active module 1 and the passive module 2 are connected, to ensure that the connection between the active module 1 and the passive module 2 keeps good without getting loose in an operation process, it is preferred that a fastening device should be placed between the active module 1 and the passive module 2. The fastening device may include fastening holes correspondingly set on the active module 1 and the passive module 2. The active module 1 and the passive module 2 are fastened together via the fastening holes.

Specifically, the fastening holes may include a through hole 8 placed on the passive module 2 and a corresponding screw hole 9 placed on the joint part 10, as shown in Figure 4. A screw 10 may be used to fasten the two holes. Alternatively, the screw hole 9 on the joint part 10 may be a through hole without threads. A bolt may be used to fasten the two holes. On one hand, this adds the firmness of the connection between the active module 1 and the passive module 2; on the other hand, the pressing force of the screw 10 may be utilized to press the waterproof seal 5 so that the waterproof seal 5 performance between the active module 1 and the passive module 2 is better. The through hole 8 is preferably placed around the plug 6, and accordingly, the screw hole 9 is placed around the socket 7 so that the fastening bolt or screw 10 functions better to fasten and seal the pluggable connecting device. There may be multiple through holes 8 and multiple screw holes 9, such as two, four, six or eight, preferably four through holes 8placed in the angle position of the plug 6 and four screw holes 9 placed in the angle position of the socket 7.

In the remote radio unit provided in the embodiments of the invention, the active module 1 and the passive module 2 are independent of each other. The passive part is more reliable than the active part and less liable to breakdown. To repair the active part, it is unnecessary to dismantle the entire unit so that the repair is easier, faster and less expensive.

A base station system according to an embodiment of the invention includes a base station and a remote radio unit. The remote radio unit itself is connected to an antenna and is able to receive and transmit external information. The remote radio unit is connected to the base station via an optical fiber or any other communication line, the remote radio unit is adapted to receive and transmit radio frequency signals together with the base station under the control of a base station controller so as to implement communication with a mobile terminal.

Main signal transmission links include:
the remote radio unit receives external information, processes the information and transmits the processed information to the base station;
the base station receives the information from the remote radio unit, processes the information and transmits the processed information to the remote radio unit; and
the remote radio unit receives information from the base station, processes the information and transmits the processed information to the outside.

Because the base station is connected to the remote radio unit provided by the embodiment of the invention, the operation of the base station system is more reliable.

Although the present invention has been described in details with reference to the preferred embodiments, the invention is not limited to such embodiments, it should be understood by those with ordinary skilled in the art that various modifications or equivalent alternatives may be made to the present invention without departing from the spirit and scope of the present invention.

## Claims

1. A remote radio unit, comprising an active part and a passive part, wherein the active part is placed on an active module; the passive part is placed on a passive module; and the active module and the passive module are connected via a pluggable connecting device.

2. The remote radio unit of claim 1, wherein the pluggable connecting device comprises:
a plug, placed on the passive module or the active module; and
a socket, accordingly placed on the active module or the passive module.

3. The remote radio unit of claim 1 or 2, wherein a rear part of the active module is extended downward with a joint part and the passive module is connected to the joint part of the active module.

4. The remote radio unit of claim 1 or 2, wherein a positioning device is placed between the active module and the passive module.

5. The remote radio unit of claim 4, wherein the positioning device comprises:
positioning pins placed on the passive module or the active module; and
positioning holes accordingly placed on the active module or the passive module.

6. The remote radio unit of claim 1 or 2, wherein the active module and the passive module are fastened together via a fastening device.

7. The remote radio unit of claim 1 or 2, wherein a waterproof seal is placed around the pluggable connecting device.

8. A base station system, comprising a base station and the remote radio unit of claims 1-7, wherein:
the base station and the remote radio unit are connected via a communication line;
the remote radio unit is adapted to receive and transmit radio frequency signals; and
the remote radio unit comprises an active part and a passive part, wherein the active part and the passive part are placed respectively on an active module and a passive module that are independent of each other, and the active module and the passive module are connected via a pluggable connecting device.

9. The base station system of claim 8, wherein the pluggable connecting device comprises:
a plug placed on the passive module or the active module; and
a socket accordingly placed on the active module or the passive module.

10. The base station system of claim 8 or 9, wherein a rear part of the active module is extended downward with a joint part and the passive module is placed at the rear part of the active module and connected to the joint part.

11. The base station system of claim 8 or 9, wherein a positioning device is placed between the active module and the passive module.
